# EUROPÄISCHE PATENTSCHRIFT

(11) **EP 0 741 609 B1**
(45) Veröffentlichungstag und Bekanntmachung des Hinweises auf die Patenterteilung: **14.10.1998**
(21) Anmeldenummer: 95908231.4
(22) Anmeldetag: 31.01.1995
(51) Int. Cl.: B01J 35/04, B01J 37/00, B01J 32/00, B01J 29/00

(54) **MIT ZEOLITH BESCHICHTBARE METALLISCHE FOLIE**
ZEOLITH-COATABLE METALLIC FOIL
FEUILLE METALLIQUE POUVANT ETRE RECOUVERTE DE ZEOLITHE

(30) Priorität: 04.02.1994 DE 4403500
(43) Veröffentlichungstag der Anmeldung: 13.11.1996
(73) Patentinhaber: Emitec Gesellschaft für Emissionstechnologie mbH, 53797 Lohmar (DE)
(72) Erfinder: BODE, Hans, D-42897 Remscheid (DE); PUSCH, Henry, D-42369 Wuppertal (DE)
(74) Vertreter: Kahlhöfer, Hermann, Dipl.-Phys.
(86) Internationale Anmeldenummer: EP9500337
(87) Internationale Veröffentlichungsnummer: WO9521022

(56) Entgegenhaltungen:
- EP-A- 0 036 938
- EP-A- 0 232 793
- EP-A- 0 592 667
- GB-A- 1 531 134
- US-A- 4 293 447

## Beschreibung

Die vorliegende Erfindung betrifft eine mit Zeolith beschichtbare metallische Folie sowie ein Verfahren zur Herstellung einer mit Zeolith beschichteten Folie.

Zeolithe sind speziell zusammengesetzte und behandelte Keramikmaterialien, welche aufgrund ihrer Zusammensetzung und ihrer Struktur besondere Absorptionseigenschaften für bestimmte Stoffe haben. Typischerweise können Zeolithe in einem niedrigen Temperaturbereich große Mengen gasförmiger Stoffe speichern, die sie bei höherer Temperatur wieder freisetzen.

Es gibt beispielsweise Konzepte, diese Eigenschaften von Zeolithen auszunutzen, um im Abgassystem eines Kraftfahrzeuges in der Kaltstartphase entstehende Kohlenwasserstoffe zu speichern, bis ein nachgeschalteter katalytischer Konverter warm genug ist, um diese Stoffe umzusetzen. Nach einer gewissen Aufheizung des Abgassystems werden die Kohlenwasserstoffe vom Zeolith abgegeben und im nachfolgenden katalytischen Konverter zu Wasser und Kohlendioxid oxidiert.

Für solche und ähnliche Anwendungen werden Zeolithe, insbesondere als Beschichtungen, auf Wabenkörper aufgetragen, welche von einem Abgas durchströmt werden können. Aufgrund der keramischen Zusammensetzung von Zeolithen wurden dabei zunächst keramische Wabenkörper als Träger eingesetzt. Es besteht jedoch auch das Bestreben, metallische Wabenkörper, z. B. aus Edelstahl, als Träger einzusetzen und mit Zeolith zu beschichten. Bei hohen thermischen Wechselbelastungen, wie sie z. B. in Abgassystemen von Kraftfahrzeugen auftreten, kommt es allerdings auf eine hohe Haftfestigkeit der Beschichtung an, wobei die unterschiedlichen Ausdehnungskoeffizienten von metallischen und keramischen Materialien zu berücksichtigen sind.

Aus der GB-PS 1 531 134 ist bereits ein Verfahren zum Herstellen eines beschichteten metallischen Wabenkörpers bekannt, bei dem auf eine durch Langzeitglühen hergestellte Aluminiumoxidschicht mittels eines Sol-Gel-Tauchverfahrens ein keramischer Washcoat aufgetragen wird. Diese Schrift beschäftigt sich allerdings nicht mit der haltbaren Befestigung von Kombibeschichtungen, die Zeolith enthalten.

Aufgabe der vorliegenden Erfindung ist es daher, eine mit Zeolith beschichtete metallische Folie zu schaffen, auf welcher eine Zeolithbeschichtung mit einer beliebigen Dicke haltbar befestigt ist. Auch ein Verfahren zur Herstellung einer mit Zeolith beschichteten Folie ist Ziel der vorliegenden Erfindung. Dabei soll insbesondere die Möglichkeit geschaffen werden, einen metallischen Wabenkörper nach dessen Fertigstellung vorzubehandeln und mit einem Zeolith zu beschichten.

Zur Lösung dieser Aufgabe dient eine metallische Folie, insbesondere in Form eines Wabenkörpers, bei dem die Folie aus einem Aluminium und vorzugsweise auch Chrom enthaltenden Stahl besteht, deren Oberfläche mit einer Oxidschicht bedeckt ist, wobei auf der Oxidschicht ein als Haftvermittlungsschicht dienender keramischer Washcoat vorhanden ist, auf dem in bekannter Weise eine Zeolithschicht aufgetragen ist. Eine mit Oxidschicht und Haftvermittlungsschicht ausgestattete Folie bildet außen eine keramische Struktur, die in bekannter Weise wie keramische Wabenkörper mit Zeolith beschichtet werden kann, was bisher für metallische Trägerkörper und metallische Folien nicht möglich war. Dabei kann eine Zeolithschicht auch zusätzlich katalytisch aktives Material, insbesondere Edelmetalle, enthalten oder nachträglich damit beladen werden, ohne daß dies Nachteile mit sich bringen würde. Solche Kombischichten können in Abgasreinigungsanlagen sogar besonders wirksam sein.

Besonders geeignet für den vorliegenden Zweck sind Folien aus hochtemperatur-korrosionsfestem Stahl, die vorzugsweise mehr als 3,5 % Aluminium und mehr als 15 % Chrom enthalten, insbesondere etwa 5 % Aluminium und etwa 20 % Chrom. Auf solchen Stählen kann eine feinkörnige Aluminiumoxidschicht mit keinen oder nur geringen Anteilen von Chrom- und Eisenoxid hergestellt werden, wie anhand der Ausführungsbeispiele und der Zeichnungen noch näher erläutert wird. Dies ist insbesondere durch Langzeitglühen in Atmosphäre möglich. Dabei entsteht eine Oxidschicht, die eine mittlere Oberflächenrauhigkeit (Mittenrauhwert Rₐ) von 2 bis 4 µm, vorzugsweise 3 µm aufweist und deren gemittelte Rauhtiefe R_{z} mindestens 0,2 µm beträgt.

Auf diese Oxidschicht läßt sich eine keramische Haftvermittlungsschicht auf Aluminiumoxidbasis nach einem Sol-Gel-Tauchverfahren aufbringen, die im wesentlichen γ-Al₂O₃ enthält. Eine bevorzugte Schichtdicke für die keramische Haftvermittlungsschicht ist 1 bis 5 µm, insbesondere etwa 2 µm. Diese Haftvermittlungsschicht soll dabei eine spezifische Oberfläche von 100 bis 200 m²/g, vorzugsweise etwa 180 m²/g aufweisen.

Eine wesentlicher Vorteil der vorliegenden Erfindung liegt darin, daß zunächst die Oberfläche einer metallischen Folie so vorbehandelt wird, daß eine sehr gleichmäßige und feinkörnige Oxidschicht, im wesentlichen eine Aluminiumoxidschicht gebildet wird. Dabei hat sich allerdings gezeigt, daß auf dieser Schicht direkt eine Zeolithschicht nicht mit großer Haftfestigkeit aufgebracht werden kann, da Oxidschicht und Zeolithschicht zu unterschiedliche Eigenschaften und Strukturen aufweisen. Erfindungsgemäß kann hier ein keramischer Washcoat als Haftvermittlungsschicht dienen, wobei dieser Washcoat einerseits besonders gut an der vorbereiteten Oxidschicht haftet, andererseits aber eine größere Ähnlichkeit zu der aufzubringenden Zeolithschicht aufweist, so daß auch die Haftung der Zeolithschicht an der Haftvermittlungsschicht hohen Anforderungen genügt. Insbesondere kann die Haftvermittlungsschicht nach dem Aufbringen durch Calcinieren noch verändert werden, um die Haftungsbedingungen für die später aufzubringenden Zeolithschicht zusätzlich zu verbessern.

Wie anhand der im folgenden beschriebenen Verfahrensschritte noch verdeutlicht wird, sind die Schichtdicken und die Oberflächenbeschaffenheit sowie die Zusammensetzung der Zeolithbeschichtung von Bedeutung für die spätere Haftfestigkeit, insbesondere unter thermischen Wechselbelastungen. Eine dünne Oxidschicht bewirkt beispielsweise einen guten Wärmeübergang zwischen einer metallischen und einer keramischen Schicht.

Ein typisches Verfahren zur Herstellung einer Zeolith beschichteten metallischen Folie enthält folgenden Schritte:
- eine Stahlfolie mit Anteilen von Chrom und/oder Aluminium wird so oxidiert, daß sich eine feinkörnige Aluminiumoxidschicht an der Oberfläche bildet;
- auf der Oxidschicht wird ein als Haftvermittlungsschicht dienender keramischer Washcoat aufgetragen;
- auf der keramischen Haftvermittlungsschicht wird eine Zeolithschicht aufgebracht.

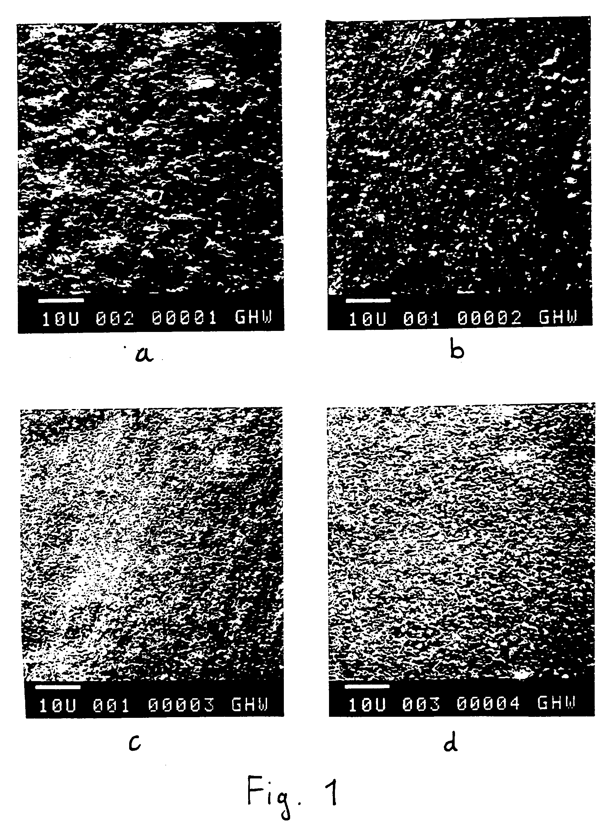

Ein hochtemperatur-korrosionsfester Stahl, mit beispielsweise etwa 5 % Aluminium und etwa 20 % Chrom kann durch eine mehrstündige Behandlung bei einer Temperatur von etwa 950°C in Atmosphäre mit einer besonders feinkörnigen Aluminiumoxidschicht versehen werden. In den Figuren 1a bis 1d ist die Oberfläche einer solchen Folie im Ausgangszustand (Fig. 1a) nach einer Glühzeit von fünf Stunden (Fig. 1b), nach einer Glühzeit von 24 Stunden (Fig. 1c) und nach einer Glühzeit von 48 Stunden (Fig. 1d) bei einer Glühtemperatur von 950°C unter Normalatmosphäre dargestellt. Es entwickelt sich eine fast aus reinem Aluminiumoxid bestehende Schicht ohne wesentliche Chrom- oder Eisenanteile. Die Oberfläche wird sehr feinkörnig und weist eine mittlere Oberflächenrauhigkeit von etwa 3 µm und eine gemittelte Rauhtiefe von mindestens 0,2 µm auf. In einer solchen Oberfläche läßt sich ein keramischer Washcoat besonders fest verankern.

Ein solcher Washcoat auf Aluminiumoxidbasis wird vorzugsweise nach einem ansich bekannten Sol-Gel-Tauchverfahren aufgebracht, wobei insbesondere ein Aluminiumoxid-Sol mit einem Feststoffanteil von etwa 10 % (Gewichtsprozent) verwendet wird. Die so aufgebrachte Haftvermittlungsschicht wird nach dem Tauchprozeß etwa drei Stunden bei einer Temperatur von 500°C bis 650°C, vorzugweise 550°C calciniert und besteht im wesentlichen aus γAl₂O₃.

Auch die Zeolithschicht kann mittels eines Sol-Gel-Tauchverfahrens aufgebracht werden, wobei es besonders günstig ist, wenn diese Schicht außer Zeolithmaterial noch 10 % bis 30 % (Massenprozent) Aluminiumoxid enthält, bevorzugt etwa 20 %. Dabei kann der Zeolith in einer NH4⁺ oder H⁺-Form aufgebracht werden, die in bekannter Weise durch Ionenaustausch hergestellt wird. Der aufzubringende Zeolith wird nach Vergleichmäßigung des Gemenges durch mehrstündiges Mahlen in einer Kolloid-Mühle in eine keramische Matrix eingebunden, die vorzugsweise aus einem Sol auf der Basis von Aluminiumoxid besteht.

Besonders sinnvoll ist die Anwendung des beschriebenen Verfahrens auf fertig hergestellte Wabenkörper aus Stahlfolien, wobei diese Wabenkörper aus zumindest teilweise strukturierten Folien geschichtet, gewickelt oder anderweitig verschlungen werden können. Typischerweise bestehen solche Wabenkörper aus abwechselnd angeordneten Lagen von glatten und gewellten Stahlblechen und bilden für ein Abgas durchlässige Strömungskanäle. Werden solche Wabenkörper nach dem Sol-Gel-Verfahren tauchbeschichtet, so bleiben große Mengen von Beschichtungsmaterial seitlich in den Kanälen hängen und müssen beseitigt werden. Der Stand der Technik kennt hierzu die Methode des Ausblasens mittels Preßluft, jedoch ist es schwierig auf diese Weise sehr gleichmäßige Schichtdicken zu erzielen.

Erfindungsgemäß ist es besonders vorteilhaft, überschüssiges Beschichtungsmaterial nach dem Beschichten durch Zentrifugieren des Wabenkörpers, bei dem die Strömungskanäle in radialer Richtung zur Zentrifugenachse liegen sollten, zu beseitigen. Für eine besonders gleichmäßige Schichtdicke sollte das Zentrifugieren nacheinander in Richtung beider Stirnseiten erfolgen, wozu der Wabenkörper nach dem ersten Zentrifugiervorgang um 180° gewendet werden muß.

Während für die Haftvermittlungsschicht die einmal gewählte Schichtdicke von beispielsweise 2 µm unverändert bleibt, kann die Dicke der Zeolithbeschichtung dadurch vergrößert werden, daß der Vorgang der Beschichtung mit Zeolith, nämlich Beschichten, Zentrifugieren und Calcinieren, zwei oder mehrfach wiederholt wird. Auf diese Weise lassen sich pro Beschichtungswiederholung ca. 15 µm Zeolith aufbringen.

Bevorzugt wird auf den Wabenkörper ein Zeolithanteil von mindestens 30 g pro m² Trägeroberfläche aufgebracht.

Es ist selbstverständlich, daß typische Bearbeitungsschritte wie das Trocknen von aufgebrachten Beschichtungen vor dem Calcinieren auch bei der vorliegenden Erfindung zur Vermeidung von Trocknungsrissen und dergleichen von Vorteil sind.

Zur Veranschaulichung der vorliegenden Erfindung dient auch die Zeichnung, in der
- Fig. 1 a bis d: die unterschiedlichen Stufen beim Oxidationsprozeß einer Edelstahlfolie zeigen,
- Fig. 2: den schematischen Aufbau einer erfindungsgemäß hergestellten mit Zeolith beschichteten Folie zeigt und
- Fig. 3: einen typischen metallischen Wabenkörper im Querschnitt darstellt.

In Fig. 1, die nicht maßstabgerecht ist, ist eine Metallfolie 1 mit einer Oxidschicht 2, einer keramischen Haftvermittlungsschicht 3 und einer Zeolithschicht 4 versehen. Wie schematisch dargestellt ist, ist die Haftvermittlungsschicht 3 durch die Oxidschicht 2 mit einer Metallfolie 1 eher mechanisch verklammert, während die Haftung zwischen der Haftvermittlungsschicht 3 und der Zeolithschicht 4 durch deren sehr ähnliche Materialzusammensetzung und die damit verbundenen Haftungskräfte entsteht.

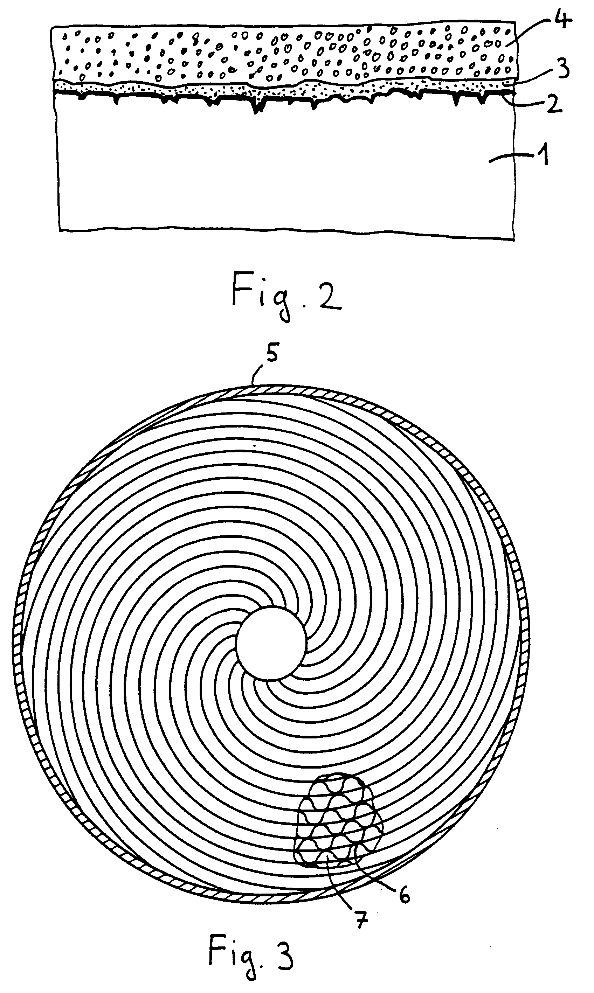

Fig. 3 zeigt einen Querschnitt durch einen typischen aus glatten und gewellten Blechen aufgebauten Wabenkörper 5, der an den Berührungsstellen der Bleche durch Lötstellen 6 verbunden ist. Auf diese Weise werden gasdurchlässige Kanäle 7 gebildet.

Nach dem erfindungsgemäßen Verfahren mit Zeolith beschichtete Wabenkörper eignen sich besonders für die Abgasreinigung bei Kraftfahrzeugen mit Verbrennungsmotoren in der Kaltstartphase.

## Patentansprüche

1. Metallische Folie, insbesondere in Form eines Wabenkörpers, mit folgenden Merkmalen:
- die Folie (1) besteht aus einem Aluminium enthaltenden Stahl, der vorzugsweise auch Chrom enthält;
- die Oberfläche ist mit einer Oxidschicht (2) bedeckt;
- auf der Oxidschicht (2) ist ein als Haftvermittlungsschicht (3) dienender keramischer Washcoat vorhanden;
**dadurch gekennzeichnet**,
- daß die Oxidschicht (2) eine mittlere Oberflächenrauhigkeit (Mittenrauhwert Rₐ) von 2 bis 4 µm, vorzugsweise 3 µm aufweist und die gemittelte Rauhtiefe R_{z} mindestens 0,2 µm beträgt und
- daß auf der Haftvermittlungsschicht (3) eine Zeolith enthaltende Schicht (4) aufgebracht ist.

2. Folie nach Anspruch 1,
**dadurch gekennzeichnet**,
daß die Folie (1) aus hochtemperatur-korrosionsfestem Stahl besteht, der vorzugsweise mehr als 3,5 % Aluminium und mehr als 15 % Chrom enthält, insbesondere etwa 5 % Aluminium und etwa 20 % Chrom.

3. Folien nach Anspruch 1 oder 2,
**dadurch gekennzeichnet**,
daß die Oxidschicht (2) eine feinkörnige Aluminiumoxidschicht mit keinen oder nur geringen Anteilen von Chrom- und Eisenoxid ist, vorzugsweise durch Langzeitglühen in Atmosphäre hergestellt.

4. Folie nach Anspruch 1, 2 oder 3,
**dadurch gekennzeichnet**,
daß die keramische Haftvermittlungsschicht (3) auf Aluminiumoxidbasis nach einem Sol-Gel-Tauchverfahren aufgebracht ist und im wesentlichen γ-Al₂O₃ enthält.

5. Folie nach Anspruch 4,
**dadurch gekennzeichnet**,
daß die keramische Haftvermittlungsschicht (3) eine Schichtdicke von 1 bis 5 µm, vorzugsweise etwa 2 µm aufweist.

6. Folie nach Anspruch 4 oder 5,
**dadurch gekennzeichnet**,
daß die keramische Haftvermittlungsschicht (3) eine spezifische Oberfläche von 100 bis 200 m²/g, vorzugsweise etwa 180 m²/g aufweist.

7. Folie nach einem der vorhergehenden Ansprüche,
**dadurch gekennzeichnet**,
daß die Folie (1) vor der Beschichtung zu einem Wabenkörper (5) geformt und zumindest ein Teil der dabei entstandenen Berührungsstellen (6) hartverlötet ist.

8. Verfahren zur Herstellung einer mit Zeolith (4) beschichteten metallischen Folie (1), insbesondere in Form eines Wabenkörpers (5), mit folgenden Schritten:
- eine Stahlfolie (1) mit Anteilen von Aluminium und vorzugsweise auch Chrom wird so oxidiert, daß sich eine feinkörnige Aluminiumoxidschicht (2) an der Oberfläche bildet;
- auf der Oxidschicht (2) wird ein als Haftvermittlungsschicht (3) dienender keramischer Washcoat aufgetragen;
- auf der keramischen Haftvermittlungsschicht (3) wird eine Zeolithschicht (4) aufgebracht.

9. Verfahren nach Anspruch 8,
**dadurch gekennzeichnet**,
daß die Folie (1) aus hochtemperatur-korrosionsfestem Stahl besteht, der vorzugsweise mehr als 3,5 % Aluminium und mehr als 15 % Chrom enthält, insbesondere etwa 5 % Aluminium und etwa 20 % Chrom.

10. Verfahren nach einem der Ansprüche 8 oder 9,
**dadurch gekennzeichnet,**
daß die Folie (1) vor der Beschichtung zu einem Wabenkörper (5) geformt und zumindest ein Teil der dabei entstehenden Berührungsstellen (6) hartverlötet wird.

11. Verfahren nach Anspruch 8, 9 oder 10,
**dadurch gekennzeichnet**,
daß auf der Folie (1) eine feinkörnige Aluminiumoxidschicht (2) mit nur geringen Anteilen von Chrom- und Eisenoxid hergestellt wird, vorzugsweise durch Langszeitglühen in Atmosphäre.

12. Verfahren nach Anspruch 11,
**dadurch gekennzeichnet**,
daß die Oxidschicht (2) durch eine mehrstündige Glühbehandlung bei einer Temperatur von 900 bis 1000° C, vorzugsweise 950° C, in Atmosphäre ausgebildet wird.

13. Verfahren nach einem der Ansprüche 8 bis 12,
**dadurch gekennzeichnet**,
daß die keramische Haftvermittlungsschicht (3) auf Aluminiumoxidbasis nach einem Sol-Gel-Tauchverfahren aufgebracht wird und im wesentlichen aus γAl₂O₃ besteht.

14. Verfahren nach Anspruch 13,
**dadurch gekennzeichnet**,
daß die keramische Haftvermittlungsschicht (3) in Form eines Aluminiumoxid-Sols, insbesondere mit einem Feststoffanteil von etwa 10 %, aufgebracht wird.

15. Verfahren nach Anspruch 13 oder 14,
**dadurch gekennzeichnet**,
daß die keramische Haftvermittlungsschicht (3) nach dem Tauchprozeß etwa drei Stunden bei einer Temperatur von 500°C bis 650°C, vorzugsweise 550°C, calciniert wird.

16. Verfahren nach einem der Ansprüche 8 bis 15,
**dadurch gekennzeichnet**,
daß die Zeolithschicht (4) mittels eines Sol-Gel-Tauchverfahrens aufgebracht wird und außer Zeolithmaterial 10 % bis 30 % (Massenprozent) Aluminiumoxid enthält, vorzugsweise etwa 20 %.

17. Verfahren nach einem der Ansprüche 10 bis 16, wobei aus der Folie (1) ein Wabenkörper (5) geformt wird,
**dadurch gekennzeichnet**,
daß nach einer Tauchbeschichtung des Wabenkörpers (5) mit einer Haftvermittlungsschicht (3) und/oder einer Zeolithschicht (4) in desen Zellen (7) vorhandene überschüssige Mengen an Beschichtungsmaterial durch Zentrifugieren des Wabenkörpers (5) entfernt werden.

18. Verfahren nach einem der Ansprüch 8 bis 17,
**dadurch gekennzeichnet**,
daß der Zeolith (4) in einer NH₄⁺ oder H⁺-Form aufgebracht wird, die in bekannter Weise durch Ionenaustausch hergestellt werden kann.

19. Verfahren nach einem der Ansprüche 8 bis 18,
**dadurch gekennzeichnet**,
daß der aufzubringende Zeolith (4) durch mehrstündiges Mahlen in einer Kolloid-Mühle in eine keramische Matrix eingebunden wird, die vorzugsweise aus einem Sol auf der Basis von Aluminiumoxid besteht.

20. Verfahren nach einem der Ansprüche 8 bis 19,
**dadurch gekennzeichnet**,
daß auf den Wabenkörper ein Zeolithanteil von mindestens 30 g pro m² Trägeroberfläche aufgebracht wird.

## Claims

1. A metallic sheet, in particular in the form of a honeycomb body, having the following features:
- the sheet (1) comprises a steel which contains aluminium and which preferably also contains chromium;
- the surface is covered with an oxide layer (2); and
- disposed on the oxide layer (2) is a ceramic washcoat serving as a bonding layer (3);
characterised in that
- the oxide layer (2) has a mean surface roughness (centre roughness value Rₐ) of 2 to 4 µm, preferably 3 µm, and the averaged roughness depth R_{z} is at least 0.2 µm, and
- a zeolite-containing layer (4) is applied to the bonding layer (3).

2. A sheet according to claim 1 characterised in that the sheet (1) comprises high-temperature corrosion-resistant steel which preferably contains more than 3.5% aluminium and more than 15% chromium, in particular about 5% aluminium and about 20% chromium.

3. A sheet according to claim 1 or claim 2 characterised in that the oxide layer (2) is a fine-grain aluminium oxide layer with no or only slight amounts of chromium and iron oxide, preferably produced by long-duration annealing in atmosphere.

4. A sheet according to claim 1, claim 2 or claim 3 characterised in that the ceramic bonding layer on an aluminium oxide basis is applied using the sol-gel dip process and substantially contains γ-Al₂O₃.

5. A sheet according to claim 4 characterised in that the ceramic bonding layer (3) is of a layer thickness of 1 to 5 µm, preferably about 2 µm.

6. A sheet according to claim 4 or claim 5 characterised in that the ceramic bonding layer (3) has a specific surface area of 100 to 200 m²/g, preferably about 180 m²/g.

7. A sheet according to one of the preceding claims characterised in that prior to the coating operation the sheet (1) is shaped to form a honeycomb body (5) and at least a part of the contact locations (6) which are produced in that procedure is brazed.

8. A process for the production of a metallic sheet (1) coated with zeolite (4), in particular in the form of a honeycomb body (5), comprising the following steps:
- a steel sheet (1) with amounts of aluminium and preferably also chromium is oxidised in such a way that a fine-grain aluminium oxide layer (2) is formed at the surface;
- a ceramic washcoat serving as a bonding layer (3) is applied to the oxide layer (2); and
- a zeolite layer (4) is applied to the ceramic bonding layer (3).

9. A process according to claim 8 characterised in that the sheet (1) comprises high-temperature corrosion-resistant steel which preferably contains more than 3.5% aluminium and more than 15% chromium, in particular about 5% aluminium and about 20% chromium.

10. A process according to one of claims 8 and 9 characterised in that prior to the coating operation the sheet (1) is shaped to form a honeycomb body (5) and at least a part of the contact locations (6) which are produced in that procedure is brazed.

11. A process according to claim 8, claim 9 or claim 10 characterised in that a fine-grain aluminium oxide layer (2) with only small amounts of chromium and iron oxide is produced on the sheet (1), preferably by long-duration annealing in atmosphere.

12. A process according to claim 11 characterised in that the oxide layer (2) is formed by an annealing treatment for a number of hours at a temperature of 900 to 1000°C, preferably at 950°C, in atmosphere.

13. A process according to one of claims 8 to 12 characterised in that the ceramic bonding layer on an aluminium oxide basis is applied using the sol-gel dip process and substantially comprises γ-Al₂O₃.

14. A process according to claim 13 characterised in that the ceramic bonding layer (3) is applied in the form of an aluminium oxide sol, in particular with a solids proportion of about 10%.

15. A process according to claim 13 or claim 14 characterised in that after the dip process the ceramic bonding layer (3) is calcined for about three hours at a temperature of 500°C to 650°C, preferably 550°C.

16. A process according to one of claims 8 to 15 characterised in that the zeolite layer (4) is applied by means of a sol-gel dip process and besides zeolite material contains 10% to 30% (percent by weight) of aluminium oxide, preferably about 20%.

17. A process according to one of claims 10 to 16 wherein a honeycomb body (5) is formed from the sheet (1), characterised in that after dip coating of the honeycomb body (5) with a bonding layer (3) and/or a zeolite layer (4) excessive amounts of coating material present in the cells (7) of the honeycomb body are removed by centrifuging the honeycomb body (5).

18. A process according to one of claims 8 to 17 characterised in that the zeolite (4) is applied in an NH₄⁺ or H⁺-form which can be produced in known manner by ion exchange.

19. A process according to one of claims 8 to 18 characterised in that the zeolite (4) to be applied is bound into a ceramic matrix by grinding for a plurality of hours in a colloid mill, said matrix preferably comprising a sol based on aluminium oxide.

20. A process according to one of claims 8 to 19 characterised in that a proportion of zeolite of at least 30 g per m² of carrier surface area is applied to the honeycomb body.

## Revendications

1. Feuille métallique, notamment sous forme d'un corps alvéolaire, présentant les particularités suivantes :
- la feuille (1) est constituée d'un acier contenant de l'aluminium, qui contient de préférence également du chrome ;
- la surface est revêtue d'une couche d'oxydation (2) ;
- un washcoat céramique servant de couche d'adhérence (3) est prévu sur la couche d'oxydation (2) ;
caractérisée en ce que
- la couche d'oxydation (2) a une rugosité moyenne de surface (valeur de rugosité moyenne Rₐ) de 2 à 4 µm, de préférence de 3 µm, en ce que la profondeur moyenne de rugosité R_{z} est d'au moins 0,2 µm, et en ce que
- une couche (4) contenant de la zéolithe est appliquée sur la couche d'adhérence (3).

2. Feuille selon la revendication 1,
caractérisée en ce que
la feuille (1) est constituée d'acier résistant aux hautes températures et à la corrosion, qui contient de préférence plus de 3,5 % d'aluminium et plus de 15 % de chrome, notamment environ 5 % d'aluminium et environ 20 % de chrome.

3. Feuille selon la revendication 1 ou 2,
caractérisée en ce que
la couche d'oxydation (2) est une couche d'oxyde d'aluminium à grain fin ne contenant que de faibles proportions d'oxyde de chrome et de fer ou n'en contenant pas, qui est de préférence réalisée par un recuit de longue durée à l'atmosphère.

4. Feuille selon la revendication 1, 2, ou 3,
caractérisée en ce que
la couche d'adhérence (3) céramique à base d'oxyde d'aluminium est appliquée selon un procédé d'immersion dans un sol/gel, et contient essentiellement de l'γ-Al₂O₃.

5. Feuille selon la revendication 4,
caractérisée en ce que
la couche d'adhérence (3) céramique a une épaisseur de 1 à 5 µm, de préférence de l'ordre de 2 µm.

6. Feuille selon la revendication 4 ou 5,
caractérisée en ce que
la couche d'adhérence (3) céramique a une surface spécifique de 100 à 200 m²/g, de préférence de l'ordre de 180 m²/g.

7. Feuille selon l'une quelconque des revendications précédentes,
caractérisée en ce que,
la feuille (1) est formée en un corps alvéolaire (5) avant l'application du revêtement, et en ce qu'une partie au moins des points de contact (6) en résultant comporte un brasage fort.

8. Procédé destiné à la fabrication d'une feuille métallique (1) revêtue de zéolithe (4), notamment sous forme d'un corps alvéolaire (5), comportant les phases suivantes :
- une feuille d'acier (1) contenant des proportions d'aluminium, et de préférence également du chrome, est oxydée de telle sorte qu'une couche d'oxyde d'aluminium (2) à grain fin se forme à la surface ;
- un washcoat céramique servant de couche d'adhérence (3) est appliqué sur la couche d'oxydation (2) ;
- une couche de zéolithe (4) est appliquée sur la couche d'adhérence (3) céramique.

9. Procédé selon la revendication 8,
caractérisé en ce que
la feuille (1) est constituée d'acier résistant aux hautes températures et à la corrosion, qui contient de préférence plus de 3,5 % d'aluminium et plus de 15 % de chrome, notamment environ 5 % d'aluminium et environ 20 % de chrome.

10. Procédé selon la revendication 8 ou 9,
caractérisé en ce que,
la feuille (1) est formée en un corps alvéolaire (5) avant l'application du revêtement, et en ce qu'une partie au moins des points de contact (6) en résultant comporte un brasage fort.

11. Procédé selon la revendication 8, 9 ou 10,
caractérisé en ce que
une couche d'oxyde d'aluminium (2) à grain fin ne contenant que de faibles proportions d'oxyde de chrome et de fer est appliquée sur la feuille (1), de préférence par un recuit de longue durée à l'atmosphère.

12. Procédé selon la revendication 11,
caractérisé en ce que
la couche d'oxydation (2) est réalisée par un traitement de recuit de plusieurs heures à l'atmosphère à une température de 900 à 1 000 °C, de préférence de 950 °C.

13. Procédé selon l'une quelconque des revendications 8 à 12,
caractérisé en ce que
la couche d'adhérence (3) céramique à base d'oxyde d'aluminium est appliquée selon un procédé d'immersion dans un sol/gel, et contient essentiellement de l'γAl₂O₃.

14. Procédé selon la revendication 13,
caractérisé en ce que
la couche d'adhérence (3) céramique est appliquée sous la forme d'un oxyde d'aluminium/sol, ayant notamment une teneur en matières solides de l'ordre de 10 %.

15. Procédé selon la revendication 13 ou 14,
caractérisé en ce que,
la couche d'adhérence (3) céramique est calcinée après le processus d'immersion pendant environ trois heures à une température de 500 °C à 650 °C, de préférence de 550 °C.

16. Procédé selon l'une quelconque des revendications 8 à 15,
caractérisé en ce que
la couche de zéolithe (4) est appliquée au moyen d'un procédé d'immersion dans un sol/gel et contient, outre le matériau zéolithe, 10 % à 30 % (pourcentage en masse) d'oxyde d'aluminium, de préférence environ 20 %.

17. Procédé selon l'une quelconque des revendications 10 à 16, dans lequel un corps alvéolaire (5) est formé avec la feuille (1),
caractérisé en ce que,
après un revêtement par immersion du corps alvéolaire (5) avec une couche d'adhérence (3) et/ou une couche de zéolithe (4), des quantités excédentaires de matériau de revêtement présentes dans les cellules (7) de cette couche sont éliminées par centrifugation du corps alvéolaire (5)

18. Procédé selon l'une quelconque des revendications 8 à 17,
caractérisé en ce que
la zéolithe (4) est appliquée sous une forme de NH₄⁺ ou d'H⁺ qui peut être réalisée de la manière connue par un échange d'ions.

19. Procédé selon l'une quelconque des revendications 8 à 18,
caractérisé en ce que,
la zéolithe (4) à appliquer est intégrée dans une matrice céramique par un broyage de plusieurs heures dans un broyeur de colloïdes, laquelle est de préférence constituée d'un sol à base d'oxyde d'aluminium.

20. Procédé selon l'une quelconque des revendications 8 à 19,
caractérisé en ce que
une proportion de zéolithe d'au moins 30 g par m² de surface de support est appliquée sur le corps alvéolaire.
